# EUROPEAN PATENT APPLICATION

(11) **EP 1 504 877 A2**
(43) Date of publication of application: **09.02.2005**
(21) Application number: 04254730.7
(22) Date of filing: 05.08.2004
(51) Int. Cl.: B29C 59/04, B29C 43/22

(54) **Process and apparatus for embossing a film surface**

(30) Priority: 05.08.2003 US 635065
(71) Applicant: GENERAL ELECTRIC COMPANY, Schenectady, NY 12345 (US)
(72) Inventor: Coyle, Dennis Joseph, Clifton Park, New York 12065 (US)
(74) Representative: Pedder, James Cuthbert

(57) **Abstract**

A process is provided for continuously embossing a pattern onto a surface of a film. The process includes heating a resin material to form a flowable melt; discharging the melt into a first nip (18), wherein the first nip (18) is an area of contact between an embossing roll (20) and a backside roll (22); pressing the melt against the embossing roll (20) and the backside roll (22); and forming a self-supporting film (29) with a surface having an embossed pattern thereon. The embossed roll (20) is heated to a temperature greater than a glass transition temperature of the resin whereas the backside roll (22) is heated to a temperature less than the glass transition temperature of the resin.

## Description

The present disclosure relates to a process and an apparatus for embossing a pattern onto a surface.

Embossing is a process by which a surface of a substrate, e.g., a continuous sheet material or web, is patterned or textured. Embossing is typically accomplished by means of a negative pattern that is pressed onto the substrate surface to form the embossed positive pattern. The negative pattern is formed on a hard material such as a metal layer on an embossing roll, belt, or continuous sleeve. The metal layers are typically fabricated from metals such as nickel, copper, steel, and stainless steel. The negative patterns can be machined into the metal layer, or the metal layer can itself be an electroformed replica of a positive pattern formed on a glass or silicon substrate, that pattern itself produced via standard photolithography techniques. There are other variations on this "mastering" and "submastering" sequence for producing embossing tools that are well known.

To emboss thermoplastic sheet materials, the sheet material is typically first preheated and subsequently pressed with a cooled embossing pattern roll. Preheating the thermoplastic sheet material softens the sheet to allow the pattern to be more accurately set into the sheet and the subsequent cooling step helps retain the pattern. In a continuous process, the sheet material is typically fed into a nip formed between an engraved metal roll having the embossed pattern and a rubber backed backup roll. The metal roll is cooled with a refrigerated solution to remove heat from the sheet and to set in the embossed pattern. The degree of preheating to soften the sheet must be carefully controlled so that no melting or degrading to the sheet will take place. To make the heat removal process as efficient as possible, no more heat should be applied than is needed to satisfactorily emboss the product.

Another variation on the embossing process, used in applications such as holograms, is to use a hot embossing roller and a backing drum to form a high-pressure nip to emboss the surface of the web passing through it. Since there is little flow of plastic material in this process, the web must be extremely flat and uniform in thickness, the rollers very rigid and precise to withstand the high nip forces, and the embossing roll not too hot to prevent sticking of the web and thus smearing of the embossed pattern.

The web may be produced using a conventional extrusion machine and then fed to a separate embossing apparatus. In these types of processes, heating the web to its softening temperature, i.e., deforming temperature, is a rate-limiting step. As a result, process speeds are often limited by the amount of time it takes to heat the web to the desired softening temperature, typically less than about 3 to about 5 feet per minute.

Many attempts have been made to improve the processing speed as well as the accuracy in the reproducibility of the embossed pattern. In U.S. Patent No. 3,689,346 to Rowland, there is described a method for continuously producing cube-corner type retroreflective sheeting. According to this method, retroreflective sheeting is produced by depositing a curable molding material upon a cube-corner mold and applying a transparent, flexible film material over the molding material, after which the molding material is cured and bonded to the film material. However, the resins specifically described in this patent for use as molding materials are mostly limited to crosslinkable resins such as plastisol type vinyl chloride resin containing a crosslinking acrylic ester monomer.

In U.S. Patent No. 4,244,683 to Rowland, there is disclosed an apparatus and method (i.e., a so-called progressive pressure forming method) for semi-continuously embossing thermoplastic synthetic resin sheeting to form cube-corner prisms on one surface thereof. In this patent, it is described that prism elements are formed by placing a series of flat embossing molds on one surface of synthetic resin sheeting traveling on an endless belt having a smooth surface, and pressure-forming the sheeting successively in three types of press stations (i.e., a preheating station, a thermoforming station, and a plurality of cooling stations). However, the prism sheeting produced by this method shows seams distinctly owing to the use of juxtaposed flat molds, resulting in a poor appearance of the product. Moreover, this method has the additional disadvantage of being inferior in productivity.

In U.S. Patent Nos. 4,486,363 and 4,601,861 to Pricone et al., there are disclosed apparatus and methods for continuously embossing cube-corner prisms on one surface of thermoplastic synthetic resin sheeting. According to the embossing methods described in these patents, a portion of an embossing tool comprising an endless belt having a precision embossing pattern is heated to a temperature above the glass transition temperature of the thermoplastic synthetic resin. Thereafter, the thermoplastic synthetic resin sheeting is continuously embossed at a plurality of pressure points and then cooled to a temperature below the glass transition temperature of the thermoplastic synthetic resin in a cooling station.

In the methods described in these patents, the embossing temperature is limited to a temperature higher than the glass transition temperature of the synthetic resin and lower than the glass transition temperature of a carrier film. If the film is heated just above its glass transition, the resin tends to have insufficient fluidity, and hence requires a long pressing time or a plurality of pressure points. Thus, these methods are not considered to be highly productive. Moreover, these methods have the disadvantage that the elements embossed under such temperature conditions show a reduction in shape accuracy owing to elastic deformation. If the film is heated far above its glass transition to assure sufficient fluidity, long pressing times are required for heating and so productivity suffers. Furthermore, since the embossing temperature is limited to a temperature higher than the glass transition temperature of the synthetic resin and lower than the glass transition temperature of a carrier film as described above, the choice of a carrier film is disadvantageously limited when high-melting synthetic resin sheeting made, for example, of a polycarbonate resin is to be embossed. Furthermore, all of the above methods require a plastic film as a raw material supplied to the embossing process, which requires a high-quality extruded film be purchased or manufactured separately, which adds significant cost to the final products.

Disclosed herein are processes and apparatus for producing a film having an embossed surface. In one embodiment of the invention, a process for embossing a film comprises heating a resin and forming a flowable melt; directing the flowable melt to a first nip; embossing a first side of the flowable melt and cooling a second side of the flowable melt to form an embossed film; and cooling the embossed film.

In another embodiment, the process comprises heating a resin and forming a flowable melt; directing a carrier film and the flowable melt to a first nip; embossing a first side of the flowable melt and cooling a second side of the flowable melt in contact with the carrier film to form an embossed film frangibly fused to the carrier film; and cooling the embossed film.

In another embodiment, the process comprises heating a resin and forming a flowable melt; directing a backing film and the flowable melt to a first nip; embossing a first side of the flowable melt and cooling a second side of the flowable melt in contact with the backing film to form an embossed film fixedly attached to the backing film; and cooling the embossed film.

An apparatus for producing a film having a surface with an embossed pattern comprises means for heating a resin to form a flowable melt and directing the flowable melt into a first nip formed between an embossing tool and a backside roll; means for maintaining the embossing tool at a temperature greater than a glass transition temperature of the resin; means for maintaining the backside roll at a temperature lower than the glass transition temperature of the resin; and means for pressing the embossing tool and backside roll together to transfer an embossed pattern to a first side of the melt and produce an embossed film; and a means for cooling said embossed film below its glass transition temperature before separating the embossed film from the embossing tool.

The invention will now be described in greater detail, by way of example, with reference to the drawings, in which:-
Figure 1 is a schematic view illustrating one embodiment of an apparatus for continuously embossing a pattern onto a film;
Figure 2 is a schematic view illustrating another embodiment of an apparatus for continuously embossing a pattern onto a film;
Figure 3 is a schematic view illustrating a third embodiment of an apparatus for continuously embossing a pattern onto a film;
Figure 4 is a schematic view illustrating a fourth embodiment of an apparatus for continuously embossing a pattern onto a film;
Figure 5 is a schematic view illustrating a fifth embodiment of an apparatus for continuously embossing a pattern onto a film;
Figure 6 is a schematic view illustrating a sixth embodiment of an apparatus for continuously embossing a pattern onto a film; and
Figure 7 is a schematic view illustrating a seventh embodiment of an apparatus for continuously embossing a pattern onto a film.

Disclosed herein are processes for producing a film having an embossed pattern formed in one surface. The processes generally include heating a resin to form a flowable melt, and directing the flowable melt into a first nip between an embossing tool maintained at a temperature greater than a glass transition temperature of the resin and a backside roll maintained at a temperature lower than the glass transition temperature of the resin. The flowable melt is pressed against the embossing tool and the backside roll forming a self-supporting film by cooling a surface of the melt in contact with the backside roll to a temperature less than the glass transition temperature of the resin, and embossing a pattern onto the other surface of the melt in contact with the embossing tool. The other surface in contact with the embossing tool is at a temperature greater than the glass temperature of the resin and as such, maintains the resin in a flowable state. The film maintains engagement with the embossing tool as it exits the first nip, may pass through additional nip rollers and/or sonic welders, is cooled, and is subsequently separated from the embossing tool.

The processes for producing the embossed film are versatile and can be practiced with or without a carrier film. When employed, the carrier film is preferably engaged with the backing roll and fed into the first nip. Advantageously, carrier films can be used to provide a desired finish to the backside surface (the non-embossed surface). For example, if a smooth polished finish to the backside surface is desired, the surface of the carrier film that contacts the melt preferably has a smooth surface. To produce a textured finish such as for light diffusion applications, the surface of the carrier film that contacts the melt preferably has a textured surface sufficient to impart the desired light diffusion properties. As used herein, the terms "texturing", "textured surface", and "textured finish" refers to the possibly imperfect replication of a surface that is not smooth, for example the tool having a random roughness on the order of 10-100 microinches Ra and the film being 50-90% of the tool roughness. In contrast, the term "embossing" refers to the precise replication of the pattern on the embossing tool (within typically <10%, preferably <5%), such pattern could also be random roughness or a specific functional microstructure such as light-diffusing, prismatic, optical lenses, microfluidic devices, etc.

In combination with providing a desired finish to the backside surface, the carrier film also serves to hold the embossed film against the tool, and to protect the film from processing defects such as stick-ripple, particle contamination, and the like. Feeding the carrier film into the first nip prevents formation of stick ripple pattern in the embossed film since sticking of the melt to the backing roll is prevented. The carrier film can be later stripped from the embossed film prior to rolling or may be left on the embossed film during rolling.

In another embodiment, a backing film can be employed. The backing film is preferably a material that will permanently adhere to the embossed film as it is produced by the flowable melt. That is, after processing, the backing film cannot be removed without damaging the embossed film. The backing film may be of the same material as the resin used to form the embossed film or a different material. If the backing film uses the same material as the embossed film, it is preferred that a thickness of the backing film is chosen to be greater than a thickness of the embossed film formed by the melt. In this manner, a higher thermal mass is provided to the backing film and melting of the backing film during processing can be prevented. For similar reasons, if the backing film is selected from a material that has a glass transition temperature less than the resin used to form the embossed film, a careful balance between thickness as well as processing speed is required to prevent melting during processing.

Suitable resins for practicing the process include various thermoplastic or thermoset materials. Some possible examples include, but are not limited to, amorphous materials, crystalline materials, semi-crystalline materials, reaction products, and combinations comprising at least one of the foregoing materials. For example, the resin can comprise polyvinyl chloride, polyolefins (including, but not limited to, linear and cyclic polyolefins and including polyethylene, chlorinated polyethylene, polypropylene, and the like), polyesters (including, but not limited to, polyethylene terephthalate, polybutylene terephthalate, polycyclohexylmethylene terephthalate, and the like), polyamides, polysulfones (including, but not limited to, hydrogenated polysulfones, and the like), polyimides, polyether imides, polyether sulfones, polyphenylene sulfides, polyether ketones, polyether ether ketones, ABS resins, polystyrenes (including, but not limited to, hydrogenated polystyrenes, syndiotactic and atactic polystyrenes, polycyclohexyl ethylene, styrene-co-acrylonitrile, styrene-co-maleic anhydride, and the like), polybutadiene, polyacrylates (including, but not limited to, polymethylmethacrylate, methyl methacrylate-polyimide copolymers, and the like), polyacrylonitrile, polyacetals, polycarbonates, polyphenylene ethers (including, but not limited to, those derived from 2,6-dimethylphenol and copolymers with 2,3,6-trimethylphenol, and the like), ethylene-vinyl acetate copolymers, polyvinyl acetate, liquid crystal polymers, ethylene-tetrafluoroethylene copolymer, aromatic polyesters, polyvinyl fluoride, polyvinylidene fluoride, and polyvinylidene chloride. Other examples of suitable resins include, but are not intended to be limited to, epoxies, phenolics, alkyds, polyesters, polyimides, polyurethanes, mineral filled silicones, bis-maleimides, cyanate esters, vinyls, and benzocyclobutene resins. Additionally, the resin may comprise blends, copolymers, mixtures, reaction products, and composites comprising at least one of the foregoing resins.

Heating the resin to form the flowable melt is preferably performed in an extruder assembly. The general operation of extruder assemblies is known to those skilled in the art. That is, in a typical extrusion operation, resin is subjected to intense heat, pressure, and shear to form flowable melt. The flowable melt is then forced through an extrusion die. In a preferred embodiment, the melt is extruded from the extrusion die in the shape of a film, i.e., a planar form, and is discharged directly into the first nip. More preferably, the direction of the melt as it is dropped into the first nip is biased toward the embossing tool such that the film-shaped melt first contacts the embossing roll. The amount of biasing is preferably about the thickness target of the desired film. A distance between an opening of the extrusion die and the nip surface that the melt first contacts is preferably effective to maintain the flow properties of the melt, so that the melt, as it enters the first nip flows into complete conformance with the embossing pattern and that it remains in conformance until it is sufficiently cooled to below its glass transition temperature. Too great a distance will lead to premature cooling of the flowable melt resulting in incomplete duplication of the embossed pattern into the film surface as well as coating anomalies. Typically, the distance is less than or equal to about 4 inches.

The embossing tool may be a continuous embossing belt or an embossing roll having the embossing pattern on its outer surface. Where the embossing tool is an embossing roll, the embossing roll is preferably a steel drum internally heated by a heating medium such as steam, hot oil, electrical heating elements, or the like. Embossing roll drums typically have a double shell design with a spiral wrap for the most efficient passage of the heating medium. Alternatively, the embossing roll drum may be rotated about its axis in a single revolution passing a location where it is heated by an infrared lamp or other radiant heating device to a temperature above the glass transition temperature of the resin to be processed. The use of radiant heat may be used in combination with the internally heated drum or individually. Alternatively, the embossing drum can be fabricated such that the embossing pattern is contained on a thin metal or plastic sleeve that is fit over the outer surface of the drum.

Where the embossing tool is a continuous embossing belt, the belt is preferably supported by a heating roller and a cooling roller having parallel axes. The heating roller is preferably heated to a temperature greater than the glass transition temperature of the resin. The cooling roller is preferably maintained below the glass transition temperature. The temperature of the heating and cooling rollers can be controlled by internal heating and/or radiant heating as previously described, e.g., steam, hot oil, infrared lamps, and the like. The rollers are rotated to impart movement to the belt, e.g., the rollers may be driven by chains to advance the belt in the appropriate direction, or the like. The width and circumference of the belt will depend in part upon the width of the resin material to be embossed and the desired embossing speed and thickness of the belt. In the case where the film is stripped off of the belt before it makes contact with the second drum, the second drum may be heated to aid in raising the belt temperature before it returns to the embossing nip.

The backside roll is preferably a steel drum. Depending on the desired film product, the backside roll may include a highly polished surface for producing a film with a highly polished backside surface or may include an outer coating of a resilient elastomeric material for producing a film with a textured backside surface. Where the drum covered by an elastomeric material, the coating is preferably selected to be abrasion resistant and capable of withstanding the processing temperatures. Preferably, the elastomeric coating is a silicone rubber with a thickness of about 0.25 inches (about 6.35 millimeters) to about 0.5 inches (about 12.7 millimeters) and a durometer hardness based on Shore A scale of preferably about 20 to about 100, and more preferably about 60 to about 100.

The embossing tool can be forced against or maintained in close proximity to the backside roll by means of pneumatic or hydraulic cylinders and lever mechanisms. Varying the pressure to the cylinders and varying the width of contact between the embossing tool and the backside roll control the force applied to the embossing tool and can be used to speed up the replication process. The rotation speed of the rolls is preferably optimized to maintain the film properties. Maximum speed is desired to ensure that pressure is applied before the melt cools.

As previously described, the process includes maintaining the embossing roll or portion of the embossing belt that first contacts the melt at a temperature greater than the glass transition temperature of the resin and maintaining the backside roll at a temperature less than the glass transition temperature. The term "glass transition temperature" refers to the temperature at which the resin first begins to flow. Preferably, the temperature of the embossing roll or the portion of the belt that first contacts the melt is greater than or equal to about 10°C higher than the glass transition temperature (Tg) of the resin, with a temperature greater than or equal to about 50°C higher than the Tg more preferred, and a temperature greater than or equal to about 100°C higher than the Tg even more preferred.

In combination with the temperature of the embossing roll or portion of the belt, it is preferred that the backside roll has a temperature less than the glass transition temperature of the resin to be embossed. Preferably, the temperature of the backside roll is about 5°C less than Tg of the resin, with a temperature of about 10°C less than the Tg more preferred, and a temperature of about 25°C less than the Tg even more preferred. While not wanting to be bound by theory, it is believed that by maintaining the backside roll at a temperature below the glass transition temperature of the resin and the embossing tool at a temperature greater than the glass transition temperature, a temperature gradient across the thickness of the melt (film) is established. One surface of the melt is cooled below the glass transition temperature of the resin as it contacts the backside roll to form a self-supporting film whereas the other surface of the melt that contacts the embossing tool is at a temperature greater than the glass transition temperature of the resin maintaining its flow properties as it passes through the first nip. As a result, a high degree of dimensional accuracy on reproducing the embossed pattern onto the film is achieved. Moreover, it has been found that distortion and shrinkage are minimized thereby improving replication of the embossed pattern into the film surface.

As the film exits the first nip, the embossed film maintains engagement with the embossing tool and may be further pressed into the embossed pattern by additional nip rollers in contact with the embossing roll. Suitable nip rollers include a rubber roll, a metal roll, a synthetic resin roll, and other roller types as well as combinations comprising at least one of the foregoing rollers. Optionally, one or more sonic welders may be utilized, especially in applications where a carrier film or backing film is used. The sonic welders may be of the type operated by a 120 volt 60 Hertz power supply capable of vibrating at 20,000 cycles per second with horns that move through 0.010 inches. The sonic welders preferably are disposed in contact with the film after the film exits the first nip, and more preferably contacts the film after the first nip as it maintains engagement with the embossing tool.

The resulting film is then rapidly cooled at a cooling station to a temperature lower than the Tg of the resin, preferably greater than or equal to about 5°C less than the Tg, and more preferably greater than or equal to about 25°C less than the Tg. The cooling means in the cooling station may comprise, for example, blowing nozzles (e.g., for blowing a cooling medium upon one surface or both surfaces), the use of one or more chilling rollers, immersion of the film into a water bath, and the like.

Once the film has cooled to the desired temperature, the film is then separated from the embossing tool and passed to a winding station or the like. The film may be separated from the embossing tool by a common means, such as a stripping roll.

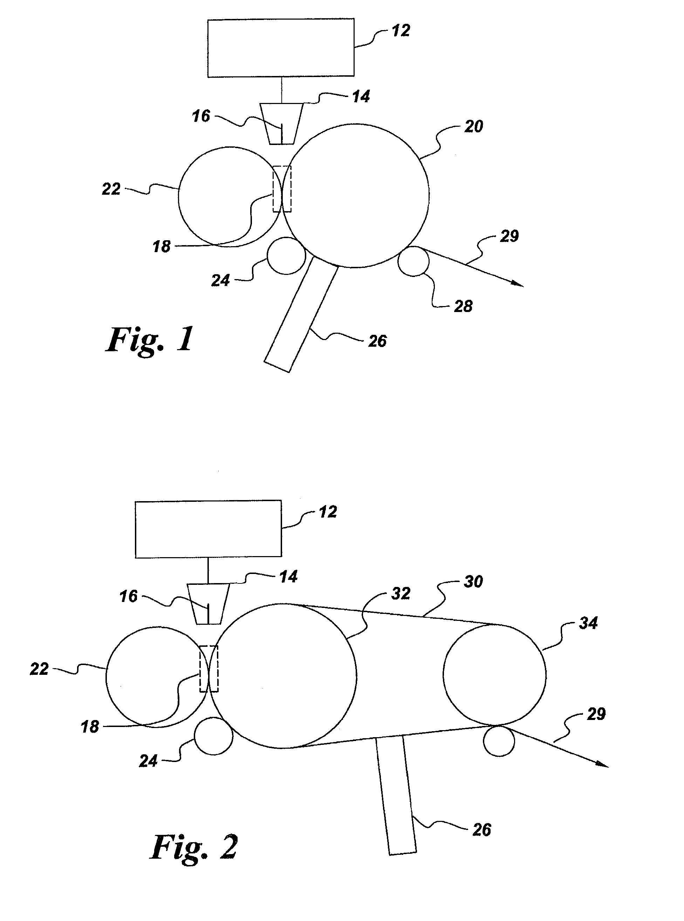

In the embodiment schematically shown in Figure 1, a flowable melt of a resin is formed in an extruder 12 and forced through an extruder die 14. The extruder die 14 preferably utilizes a slot opening 16 that discharges the melt into a first nip 18. The first nip 18 refers to the area of contact between two rolls 20, 22 in proximity that apply pressure on the melt when the melt passes between them. The dimensions of the slot opening, i.e., height and width dimensions, generally conform to the desired film dimensions of thickness and width. Roll 20 is an embossing roll having an embossed pattern thereon. The embossing roll 20 is maintained at a temperature greater than the glass transition temperature of the resin. Roll 22 is a backside roll having a temperature less than the glass temperature of the resin. In a preferred embodiment, the slot opening 16 of the extruder die 14 is positioned in a biased position such that the melt is discharged onto the embossing roll 20. The amount of biasing from the point of contact between the two rolls 20, 22 is preferably about the width of the slot opening or a targeted thickness dimension for the embossed film, 29.

As the melt passes through the first nip 18, a temperature gradient across the thickness of the melt is established. The portion of the melt in contact with the backside roll 22 solidifies to form a self-supporting film, i.e., the temperature of the resin portion contacting the backside roll 22 is below the glass transition temperature of the resin. In contrast, the portion of the melt in contact with the embossing roll 20 is at a temperature greater than the glass temperature of the resin, and as such, maintains its flow properties so that the embossing roll 20 reproducibly imprints the embossed pattern into the softened surface of the melt in contact therewith.

The embossed film maintains engagement with the embossing roll 20 and may be further pressed with the embossed pattern by nip roller 24 in contact with the embossing roll 20. Additional nip rollers, sonic welders, and the like, may also be added depending on the intended embossing application.

The embossed film is then cooled at a cooling station 26 by any number of methods. Such methods include moving the film over one or more chilled rollers, delivering the film to a water bath, cooling by air or other gases, and the like. After passing through the cooling station 26, the embossed film 29 is separated from the embossing roll 20 at stripping roller 28.

Figure 2 schematically illustrates one embodiment employing an embossing belt 30 to form the embossed pattern in the film in the manner described with respect to Figure 1. The embossing belt 30 is disposed around two rollers 32, 34. Roller 32 is preferably maintained at a temperature sufficient to heat a portion of the embossing belt 30 that contacts the melt to a temperature greater than the glass transition temperature of the resin. Roller 34 is preferably below the glass transition temperature of the resin. Rollers 32, 34 may be driven by chains or any other suitable drive mechanism (not shown) to advance the belt in the appropriate direction. The flowable melt as it is discharged from the extruder die 14 into the first nip 18 contacts the embossed pattern provided by the embossing belt 30 and the backside roll 22 to produce a self-supporting film 29 having an embossed pattern formed in one surface. The embossed film 29 maintains engagement with the belt 30 and may pass through additional, successive nip rollers 24 for further pressing of the embossed pattern into the film surface. The embossed film 29 is then cooled at cooling station 26 and subsequently separated from the embossing belt 30 at stripper roller 28. The embossed film 29 may then be fed to a winding station or the like.

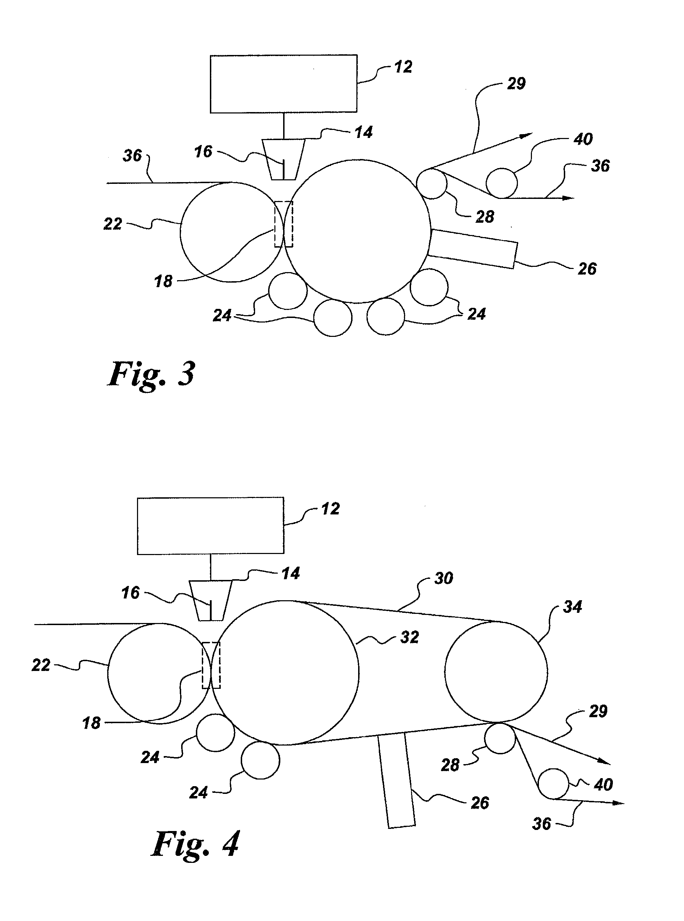

Figures 3, 4, and 5 schematically illustrate various embodiments in which a carrier film is employed in the process. The carrier film 36 is preferably fabricated from a material that has a glass transition temperature higher than the resin used to form the embossed film.

In Figure 3, the carrier film 36 is rotatably engaged with the backside roll 22 and drawn under tension into the first nip 18. The flowable melt is discharged from the slot opening 16 of the extruder die 14 into the first nip 18. The slot opening 16 is preferably biased such that the flowable melt is discharged onto the embossed roll 20 in the manner previously described. As the melt and the carrier film 36 pass through the first nip 18, the embossing roll 20 imprints an embossed pattern onto a surface of the melt. The other surface of the melt, i.e., the non-embossed surface, is frangibly fused to the carrier film 36 to form a laminate. The laminate, i.e., embossed film 29 and carrier film 36, maintains engagement with the embossing roll 20 and can be further pressed by additional nip rollers 24 as shown. Optionally, the laminate may pass through a sonic welding station. If the nip rollers 24 are present, the sonic welding station may be disposed before, between, or after passing through the additional nip rollers 24.

The laminate is then cooled at cooling station 26 and removed from engagement with the embossing roll 20 at stripper roller 28. Once separated from the embossing roll 20, the carrier film 36 may then be stripped from the embossed film 29 by engaging the carrier film with stripper roller 40 as shown, or alternatively, can be left on the embossed film. Once the carrier film is removed from the embossed film 29, the surface of the embossed film that was frangibly fused to the carrier film 36, i.e., the non-embossed surface, will have a mirror image of the surface of the carrier film. In this manner, the amount of texture present on the non-embossed surface can be controlled for those applications where it is desired, e.g., light diffusion applications, high gloss, and the like.

Optionally, the carrier film 36 may include a release coating for controlling the gloss to the non-embossed surface of the film or for facilitating the ease in which the carrier film 36 is separated from the embossed film 29. The release coat is preferably a silicone based liquid coating applied to the carrier film by a coating process such as a gravure printing process, by direct or reverse roll coating, or the like. The carrier film 36, individually or in combination with the release coat, may also include a transfer film that is transferred to the back of the embossed film during processing. The transfer film may be fabricated from the same or different material than the resin used to form the embossed film, or may comprise one or more layers depending on the desired application.

In Figure 4, the carrier film 36 is employed in combination with embossing belt 30. The embossing belt 30 forms the embossed pattern in the flowable melt in the manner previously described.

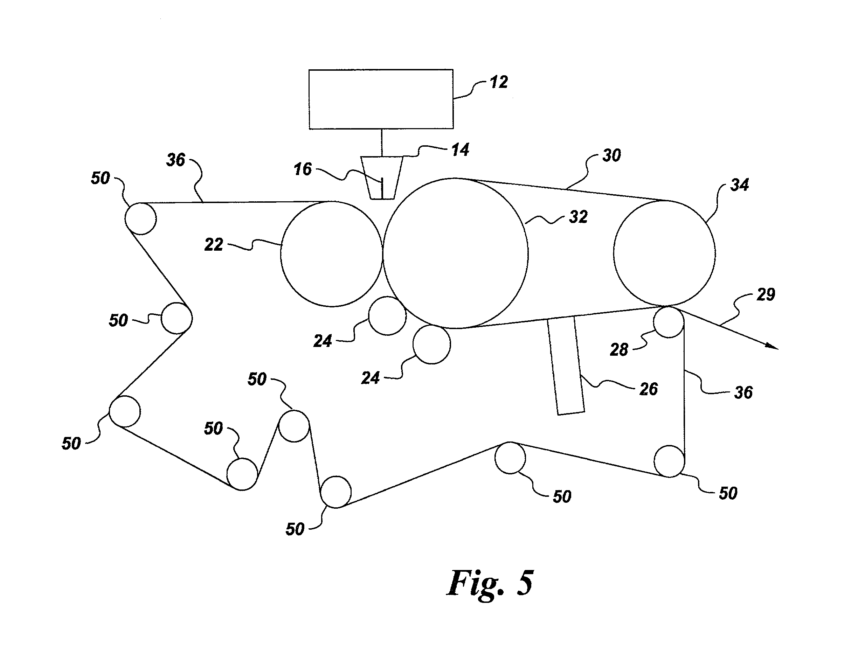

In Figure 5, the carrier film 36 is configured as an endless belt. A seamless loop of the carrier film 36 is wound about a series of rollers 50 and the backside roll 22 with suitable tension. Roller 32 is preferably maintained at a temperature sufficient to heat the portion of the embossing belt 30 that contacts the melt to a temperature greater than the glass transition temperature of the resin. The backside roll 22 is maintained below the glass transition temperature of the carrier film and may still be above the glass transition temperature of the resin. The embossed film 29 and carrier film 36 are frangibly fused together as they pass through the first nip 18 and maintain engagement with the embossing belt 30 by means of additional nip rollers 24 in contact with the belt. The embossed film and carrier film 36 then pass through the cooling station 26 and subsequently pass through an additional stripper roller, wherein the embossed film 29 is separated from the carrier film 36 and fed to a winding station or the like. In an alternative embodiment, an embossing roll 20 could be substituted for the embossing belt 30.

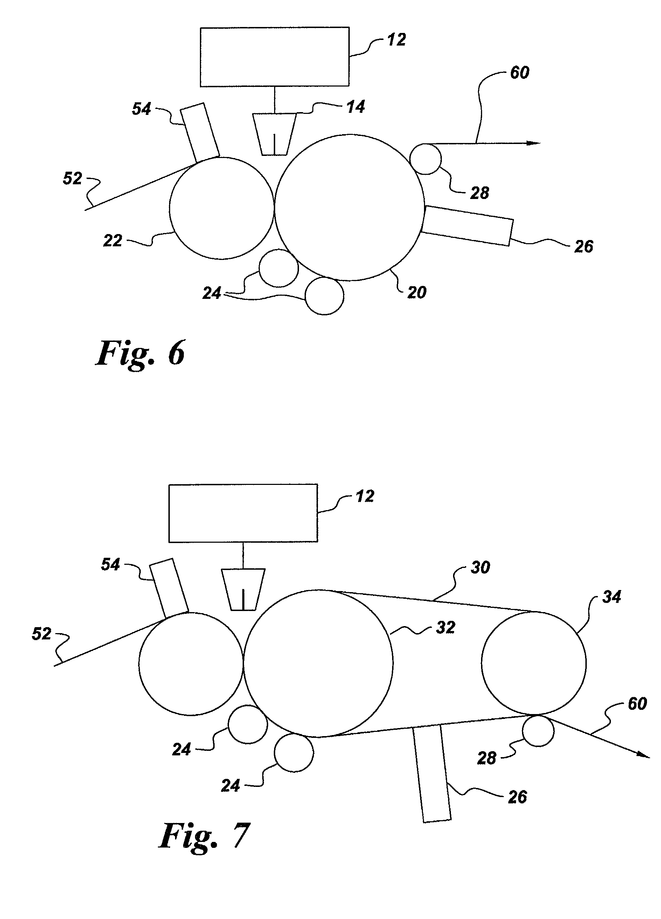

Figures 6 and 7 schematically illustrate various embodiments in which a backing film 52 is employed in the process. During processing, the backing film 52 is fixedly attached to the embossed film. The backing film 52 is preferably thicker than the thickness of the embossed film so that the thermal mass is greater for avoiding melting of the web. The backing film 52 may have a glass transition temperature greater than, equal to, or lower than the glass transition temperature of the resin used to form the embossed film. However, careful selection of the thickness and processing speed is needed to prevent melting or deformation defects. In a preferred embodiment, the backing film 52 and the resin employed for producing the embossed film are the same material.

In Figure 6, the backing film 52 is engaged with the backside roll 22 and drawn under tension into the first nip 18. Optionally, a thermal management station 54 is employed to carefully control the temperature of the backing film 52. The thermal management station 54 is capable of heating or cooling the backing film 52. The flowable melt is discharged from the slot opening 16 of the extruder die 14 into the first nip 18. The amount of the flowable melt disposed onto the embossed roll 20 can be more or less than the amount required to fill the embossed pattern since the backing film will form an integral part of the embossed film as it is produced. As the backing film 52 enters the first nip 18, the melt filled or partially melt filled embossed pattern is transferred to the backing film 52 and fixedly attached therewith. In the case where the flowable melt fills less than the embossed pattern, the backing film preferably has a sufficient thickness to permit perfect replication of the complete embossed pattern. That is, the embossed pattern is simultaneously embossed in the backing film while the partially melt filled embossed pattern is fixedly attached to provide perfect replication of the embossed pattern. Contact of the embossing roll 20 with a surface of the backing film 52 causes the contacted surface to soften, which facilitates the fixed attachment of the melt to the backing film 52, thereby reproducing the embossed pattern onto the backing film surface. The other surface of the backing film 52 is in contact with the backside roller 22, which is maintained at a temperature below the glass transition temperature of the backing film material. In this manner, the backing film 52 maintains its structural integrity, yet permits the fixed attachment of the melt to its surface. The embossed film 60 (backing film and fixedly attached, patterned melt) maintains engagement with the embossing roll and can then pass through additional nip rollers 24 for further pressing of the embossed pattern onto the backing film 52. The embossed film 60 is then cooled by cooling station 26 and subsequently separated from the embossing roll 20 by use of stripping roller 28.

In Figure 7, the backing film 52 is employed in combination with embossing belt 30 to form the embossed pattern in a method similar to that illustrated in Figure 4 without the use of stripper roller 40.

The present disclosure provides processes for embossing one surface of a film and optionally texturing the other surface. Advantageously, the processes eliminate the step of separately forming a continuous sheet material and feeding the sheet material into a separate embossing apparatus, which is a significant reduction in cost. Significant reductions in process times can also be achieved by directly extruding the flowable melt into the embossing apparatus. In this manner, the processing speeds for the embossing process may be optimized to more closely match typical extrusion speeds. Moreover, by maintaining the embossing tool at a temperature greater than the glass transition temperature of the resin and the backside roll at a temperature less than the glass transition temperature, the embossed pattern is accurately reproduced with minimal shrinkage and distortion effects. The processes can be practiced with or without a carrier film. Utilizing the carrier film in the first provides the user with control over the surface texture of the non-embossed surface. Still further, the processes can advantageously be used for permanently attaching a backing film. In these processes, the flowable melt can be used to partially fill or completely fill the embossed pattern.

For the sake of good order, various aspects of the invention are set out in the following clauses:-
1. A process for embossing a film, the process comprising:
   heating a resin and forming a flowable melt;
   directing the flowable melt to a first nip;
   embossing a first side of the flowable melt and cooling a second side of the flowable melt to form an embossed film; and
   cooling the embossed film.
2. The process according to Clause 1, wherein directing the flowable melt into the first nip comprises extruding the flowable melt from an extruder apparatus.
3. The process according to Clause 1, wherein embossing the first side of the flowable melt and cooling the second side of the flowable melt to form the embossed film comprises contacting the first side of the flowable melt with an embossing tool at a temperature greater than a glass transition temperature of the resin and contacting the second side of the flowable melt with a backside roll at a temperature less than the glass transition temperature of the resin.
4. The process according to Clause 3, wherein the temperature of the backside roll is greater than or equal about 5°C lower than the glass transition temperature of the resin.
5. The process according to Clause 3, wherein the temperature of the embossing tool is greater than or equal to about 10°C higher than the glass transition temperature (Tg) of the resin
6. The process according to Clause 1, further comprising biasing the direction of the flowable melt into the nip toward the embossing tool.
7. The process according to Clause 1, wherein the resin is selected from the group consisting of thermoplastics, thermosets, copolymers, reaction products, and combinations comprising at least one of the foregoing resins.
8. The process according to Clause 1, further comprising exposing the embossed film to a vibrating sonic welding head.
9. The process according to Clause 1, further comprising engaging a carrier film with the backside roll for introducing the carrier film into the first nip; and frangibly fusing the carrier film to the second side of the embossed film.
10. The process according to Clause 9, further comprising applying a release coat to the carrier film prior to introducing the carrier film into the first nip.
11. The process according to Clause 9, further comprising applying a transfer film to the carrier film prior to introducing the carrier film into the first nip.
12. The process according to Clause 9, wherein the carrier film comprises a seamless loop of film wound about two or more rollers.
13. The process according to Clause 9, further comprising frangibly fusing a textured surface of the carrier film to the second side to replicate the textured surface onto the second side of the embossed film.
14. The process according to Clause 1, further comprising engaging a backing film with the backside roll for introducing the backing film into the first nip; and fixedly attaching the backing film to the second side of the embossed film.
15. The process according to Clause 14, wherein the backing film and the resin comprise the same material.
16. A process for producing an embossed film, the process comprising:
   heating a resin and forming a flowable melt;
   directing a carrier film and the flowable melt to a first nip;
   embossing a first side of the flowable melt and cooling a second side of the flowable melt in contact with the carrier film to form an embossed film frangibly fused to the carrier film, wherein the second side is textured with a surface texture provided by the carrier film;
   cooling the embossed film; and
   separating the carrier film from the embossed film.
17. An apparatus for producing a film having a surface with an embossed pattern, the apparatus comprising:
   means for heating a resin to form a flowable melt and directing the flowable melt into a first nip formed between an embossing tool and a backside roll;
   means for maintaining the embossing tool at a temperature greater than a glass transition temperature of the resin;
   means for maintaining the backside roll at a temperature lower than the glass transition temperature of the resin; and
   means for pressing the embossing tool and backside roll together to transfer an embossed pattern to a first side of the melt and produce an embossed film.
18. The apparatus according to Clause 17, wherein the embossing tool comprises an embossing belt or an embossing roll.
19. The apparatus according to Clause 17, wherein the means for flowing the melt comprises an extruder apparatus.
20. The apparatus according to Clause 17, further comprising means for introducing a carrier film into the first nip and frangibly fusing the backing film to the embossed film.
21. The apparatus according to Clause 17, further comprising means for introducing a backing film into the first nip and fixedly attaching the backing film to the embossed film.
22. The apparatus according to Clause 17, further comprising means for cooling the embossing tool and embossed film to a temperature below the resin glass transition temperature before stripping the film from the tool.

## Claims

1. A process for embossing a film, the process comprising:
heating a resin and forming a flowable melt;
directing the flowable melt to a first nip (18);
embossing a first side of the flowable melt and cooling a second side of the flowable melt to form an embossed film (29); and
cooling the embossed film (29).

2. The process according to Claim 1, wherein directing the flowable melt into the first nip (18) comprises extruding the flowable melt from an extruder (12).

3. The process according to Claim 1, wherein embossing the first side of the flowable melt and cooling the second side of the flowable melt to form the embossed film (29) comprises contacting the first side of the flowable melt with an embossing tool at a temperature greater than a glass transition temperature of the resin and contacting the second side of the flowable melt with a backside roll (22) at a temperature less than the glass transition temperature of the resin.

4. The process according to Claim 1, further comprising engaging a carrier film (36) with the backside roll (22) for introducing the carrier film 36 into the first nip (18); and frangibly fusing the carrier film (36) to the second side of the embossed film (29).

5. The process according to Claim 4, further comprising applying a release coat to the carrier film (36) prior to introducing the carrier film into the first nip.

6. The process according to Claim 4, further comprising applying a transfer film to the carrier film (36) prior to introducing the carrier film into the first nip (18).

7. The process according to Claim 4, further comprising frangibly fusing a textured surface of the carrier film (36) to the second side to replicate the textured surface onto the second side of the embossed film (29).

8. The process according to Claim 1, further comprising engaging a backing film (52) with the backside roll (22) for introducing the backing film (52) into the first nip (18); and fixedly attaching the backing film (52) to the second side of the embossed film (29).

9. A process for producing an embossed film (29), the process comprising:
heating a resin and forming a flowable melt;
directing a carrier film (36) and the flowable melt to a first nip (18);
embossing a first side of the flowable melt and cooling a second side of the flowable melt in contact with the carrier film (36) to form an embossed film (29) frangibly fused to the carrier film, wherein the second side is textured with a surface texture provided by the carrier film (36);
cooling the embossed film (29); and
separating the carrier film (36) from the embossed film (29).

10. An apparatus for producing a film having a surface with an embossed pattern, the apparatus comprising:
means for heating a resin to form a flowable melt and directing the flowable melt into a first nip (18) formed between an embossing tool and a backside roll (22);
means for maintaining the embossing tool at a temperature greater than a glass transition temperature of the resin;
means for maintaining the backside roll *22) at a temperature lower than the glass transition temperature of the resin; and
means for pressing the embossing tool and backside roll (22) together to transfer an embossed pattern to a first side of the melt and produce an embossed film (29).
